# EUROPÄISCHE PATENTSCHRIFT

(11) **EP 0 766 794 B1**
(45) Veröffentlichungstag und Bekanntmachung des Hinweises auf die Patenterteilung: **08.09.1999**
(21) Anmeldenummer: 95920767.1
(22) Anmeldetag: 07.06.1995
(51) Int. Cl.: F16D 3/18, F16D 1/08, F16D 1/076, F16D 1/12

(54) **KUPPLUNG**
COUPLING DEVICE
DISPOSITIF D'ACCOUPLEMENT

(30) Priorität: 15.06.1994 DE 4420822
(43) Veröffentlichungstag der Anmeldung: 09.04.1997
(73) Patentinhaber: Hörmann KG Brockhagen, 33803 Steinhagen (DE)
(72) Erfinder: HÖRMANN, Thomas, J., D-66606 St. Wendel (DE)
(74) Vertreter: Flügel, Otto, Dipl.-Ing.
(86) Internationale Anmeldenummer: DE9500744
(87) Internationale Veröffentlichungsnummer: WO9534764

(56) Entgegenhaltungen:
- EP-A- 0 588 468
- CH-A- 257 504
- DE-A- 2 135 588
- DE-B- 1 209 369
- US-A- 2 055 014
- US-A- 2 551 735
- US-A- 3 178 909
- US-A- 3 402 572
- US-A- 3 834 182
- US-A- 5 083 471

## Beschreibung

Die Erfindung betrifft eine Kupplung zwischen zwei Wellenteilen einer Torsionsfederwelle, vorzugsweise für Sektionaltore oder dergleichen, bestehend aus zwei die beiden einander zugewandten Endbereiche der Wellenteile aufnehmenden Halterungen, in welchen die Wellenteile drehfest gehalten sind und über welche Drehmomente von einer Halterung auf die gegenüberliegende Halterung übertragbar sind, wobei die Halterungen mittels ineinandergreifender Verzahnungen derart miteinander verbindbar sind, daß eine Relativbewegung der beiden Halterungen zueinander zumindest im Bereich eines geringen Winkels zu den Längsachsen der Wellenteile möglich ist, wobei eine Halterung als mit einem Wellenteil verdrehfest verbindbare Nabe ausgebildet ist, die spielbehaftet formschlüssig mit der als Flansch eines hohlzylindrischen Aufschiebeelementes ausgebildeten zweiten Halterung zusammenwirkt, und wobei die Nabe einen Kragen aufweist, an dessen einer Seite ein Zahnkranz angeordnet ist.

Bei sogenannten Sektionaltoren handelt es sich um Gebäudeabschlußtore, die zwischen einer Öffnungs- und einer Schließstellung entlang zumindest zweier Führungsschienen bewegbar sind. Hierbei wird die Öffnungsbewegung des Sektionaltores, d.h. die Bewegung des Sektionaltores aus der Schließstellung in die Öffnungsstellung durch Kraftspeicher, nämlich Torsionsfedern unterstützt, die beim Überführen des Sektionaltores von der Öffnungsstellung in die Schließstellung gespannt und in umgekehrter Bewegungsrichtung entspannt werden. Diese Torsionsfedern sind Bestandteil einer Torsionsfederwelle, die vorzugsweise im Stutzbereich der Gebäudeöffnung angeordnet ist. Im Stand der Technik hat es sich als sinnvoll erwiesen, derartige Torsionsfederwellen zweiteilig auszubilden, wobei zwei Wellenteile jeweils an ihrem einen Ende eine Torsionsfeder aufweisen. Durch diese zweiteilige Ausbildung von Torsionsfederwellen wurden insbesondere kompakte Baumaße und erleichterte Einbaubedingungen ermöglicht. Die beiden Wellenteile werden beim Einbau der Torsionsfederwelle mittels einer Kupplung miteinander verbunden, die zwei Halterungen aufweist, welche mit jeweils einem Endbereich eines Wellenteils zusammenwirken. Die beiden Halterungen sind bei den aus dem Stand der Technik vorbekannten Kupplungen starr miteinander verbunden, so daß die beiden Halterungen zusammen mit dem Verbindungselement ein Bauteil bilden. Die Halterungen sind verdrehfest an den beiden einander zugewandten Endbereichen der Wellenteile angeordnet, so daß ein Gleichlauf der Torsionsfedern erzielt wird. Durch den Gleichlauf der Torsionsfedern wird ein Verkanten des Torblattes in seinen Führungen verhindert.

Die voranstehend beschriebenen Kupplungen zwischen zwei Wellenteilen einer Torsionsfederwelle haben sich insbesondere für Sektionaltore bewährt. Es hat sich jedoch gezeigt, daß die Verwendung der voranstehend genannten Kupplungen voraussetzt, daß die beiden Wellenteile absolut fluchtend montiert werden, da schon bei geringsten Winkelabweichungen der Rotationsachsen der Wellenteile, wie sie durch Montageungenauigkeiten, örtlichen Gegebenheiten oder dergleichen vorgegeben sein können, die Kupplungen aufgrund der dauernden Verformungsbelastungen, insbesondere wenn die Kupplungen aus Gußwerkstoff bestehen, aus der Kupplungsachse heraus brechen.

Eine Kupplung der eingangs genannten Art ist der US-A-3 402 572 entnehmbar, die als Doppel-Zahnkupplung ausgebildet ist und verhältnismäßig aufwendig aufgebaut ist. Durch die Drehmomentübertragung über zwei aufeinanderfolgend angeordnete Zahneingriffe hinweg wird eine entsprechend hohe Reibung und damit ein entsprechender Verschleiß verursacht.

Ausgehend von diesem Stand der Technik liegt der Erfindung die **Aufgabe** zugrunde, eine gattungsgemäße Kupplung zu schaffen, mit der es möglich ist, zwei mit ihren einander zugewandten Endbereichen aneinander grenzenden Wellenteilen einer Torsionsfederwelle miteinander im Drehmoment übertragenden Sinn zusammenzuschließen, obwohl sie hinsichtlich ihrer Rotationsachsen einen geringen Winkel zueinander aufweisen.

Diese Aufgabe wird erfindungsgemäß dadurch gelöst, daß die Verzahnung des Zahnkranzes bei montierter Halterung in eine Verzahnung des Flansches der Halterung eingreift, deren Zähne sich radial ins Innere einer Öffnung eines Flanschteils erstrecken, und daß das Flanschteil plattenförmig ausgebildet und unter Zwischenlage der Nabe mit dem Flansch der zweiten Halterung verbindbar ist.

Diese Ausbildung einer erfindungsgemäßen Kupplung hat insbesondere den Vorteil, daß durch die Relativbewegung der beiden Halterungen zueinander geringe Winkel hinsichtlich der Rotationsachsen der Wellenteile ausgeglichen werden können, wie sie beispielsweise aufgrund von Montageungenauigkeiten, örtlichen Gegebenheiten und dergleichen vorhanden sein können. Hierbei sind die beiden Halterungen voneinander getrennt aber über ein Verbindungsglied förmschlüssig miteinander verbunden, so daß ein Gleichlauf der beiden Wellenteile mit den daran angeordneten Torsionsfedern gewährleistet ist. Die Übertragung der Drehmomente von einem Wellenteil auf das andere Wellenteil erfolgt demzufolge über die beiden Halterungen, welche jeweils auf einem Wellenteil drehfest befestigt sind und einem die beiden Halterungen formschlüssig miteinander verbindenden Verbindungselement, das jedoch darüberhinaus eine Relativbewegung der beiden Halterungen relativ zu ihren Rotationsachsen gewährleistet. Hierunter ist sowohl eine Lageveränderung der Wellenteile zueinander in Achsrichtung als auch ein Verschwenken eines oder beider Wellen teile aus der Achsrichtung relativ zu dem gegenüberliegendem Wellenteil gemeint.

Dabei ist vorgesehen, daß eine Halterung als eine mit einem Wellenteil verdrehfest verbindbare Nabe ausgebildet ist, die spielbehaftet formschlüssig mit der als Flansch eines vorzugsweise hohlzylindrischen Aufschiebeelementes ausgebildeten zweiten Halterung zusammenwirkt. Dazu weist die Nabe einen Kragen auf, an dessen einer Seite ein Zahnkranz angeordnet ist, dessen Verzahnung sich im wesentlichen parallel zur Längsachse der Nabe erstreckt und bei montierten Halterung mit einer Verzahnung des Flansches der zweiten Halterung zusammenwirkt. Somit ist die Nabe des einen Kupplungsteiles gegenüber dem zugehörigen Flansch des zweiten Kupplungsteiles in einen bestimmten Winkelbereich aus der Kupplungsachse ausweichfähig. Diese Ausweichmöglichkeit wird dadurch erzielt, daß eine entsprechend spielbehaftete Verzahnung zwischen dem Zahnkranz im Bereich der Nabe, die in das zugehörige Flanschteil hineinragt, und einem gegenüber diesem Verzahnungsteil der Nabe vorgesehene entsprechenden Verzahnungsteil des Flansches vorgesehen ist.

Die Verzahnung des Flansches ist in einer Öffnung eines Flanschteils derart angeordnet, das sich die einzelnen Zähne radial ins Innere der Öffnung erstrecken, so daß die einzelnen Zähne mit dem Zahnkranz des Nabenkragens kämmen.

Das Flanschteil ist plattenförmig ausgebildet und wird bei der Montage der Kupplung an den Wellenteilen über das Ende eines Wellenteils geschoben, auf das anschließend die Nabe aufgesetzt wird. Somit kommt die Nabe zwischen dem Flanschteil und dem Flansch der zweiten Halterung zu liegen, wobei der Flanschteil mit dem Flansch verbunden, vorzugsweise verschraubt wird.

Eine einfache verdrehfeste Verbindung zwischen den Wellenteilen und den Halterungen wird dadurch erzielt, daß die beiden Wellenteile jeweils eine in ihrer Längsrichtung verlaufende Ausnehmung aufweisen, in die an den Halterungen angeordnete Vorsprünge eingreifen, um die Halterungen verdrehfest mit den Wellenteilen zu verbinden.

Eine weitere Verbesserung der Verbindung der Wellenteile mit den Halterungen wird dadurch erzielt, daß die erste Halterung und auch die Nabe im Bereich ihres das Wellenteil umgreifenden Mantels Materialverdickungen aufweist, welche eine Bohrung mit Gewinde aufweisen, durch die Stellschrauben zur Feststellung der Nabe auf den Wellenteil greifen.

Nach einem weiteren Merkmal der Erfindung ist vorgesehen, daß die dem Zahnkranz der Nabe gegenüberliegende Seite des Kragens antiparallel, nämlich unter einem Winkel der ihr zugewandten Fläche des Flansches verläuft, um eine Pendelbewegung der Nabe relativ zum Flansch zu ermöglichen. Beispielsweise kann dies dadurch erzielt werden, daß die der radial zur Längsrichtung der Wellenteile verlaufenden Fläche des Flansches zugewandte Fläche des Kragens zumindest in einem Teilbereich derart abgeschrägt ist, daß der Kragen der Nabe in dem zwischen dem Flansch und dem Flanschteil bestehenden Raum frei bewegbar gehalten ist. Es ist aber auch denkbar, daß die freie Bewegbarkeit der Nabe zwischen dem Flansch und dem Flanschteil dadurch erzielt wird, daß zwischen Flansch und Flanschteil ein Abstand angeordnet ist, dessen axiale Länge größer ist als die in axialer Richtung der Wellenteile verlaufende Dicke des Kragens der Nabe. Hierbei ist es lediglich wichtig, daß die Nabe in jeder Lage formschlüssig mit dem Flanschteil verbunden ist, d.h. daß der Zahnkranz der Nabe in jeder Lage in die Verzahnung des Flanschteils eingreift.

Schließlich ist es bei einer erfindungsgemäßen Kupplung vorgesehen, daß die Verzahnung im Flanschteil Unterbrechungen aufweist, in welche die Materialverdickungen eingreifen. Die Unterbrechungen im Verzahnungskranz sind dadurch bedingt, daß die Verschraubungsbereiche für die Welle vorgesehen sind. Im übrigen funktioniert die voranstehend beschriebene Kupplung auch dann noch, wenn einige Zähne abgeschliffen sind. Die Vielzahl der Zähne garantieren hierbei, daß sich je nach Winkel ein bestimmter Abrieb ergibt, der letztlich zu einer gleichmäßigen Druckbeaufschlagung sämtlicher Zahnpflanken bei Drehmomentübertragung führt.

Weitere Merkmale und Vorteile der Erfindung ergeben sich aus der nachfolgenden Beschreibung der zugehörigen Zeichnung, in der ein bevorzugtes Ausführungsbeispiel einer erfindungsgemäßen Kupplung dargestellt ist. In der Zeichnung zeigt:
- Figur 1: eine erfindungsgemäße Kupplung in einer perspektivisch dargestellten Einzelteilzeichnung;
- Figur 2: eine geschnittene Seitenansicht zweier mit der Kupplung gemäß Figur 1 verbundenen Wellenteile einer Torsionsfederwelle und
- Figur 3: eine Detaildarstellung der Kupplungsteile gemäß dem Kreis II in Figur 2.

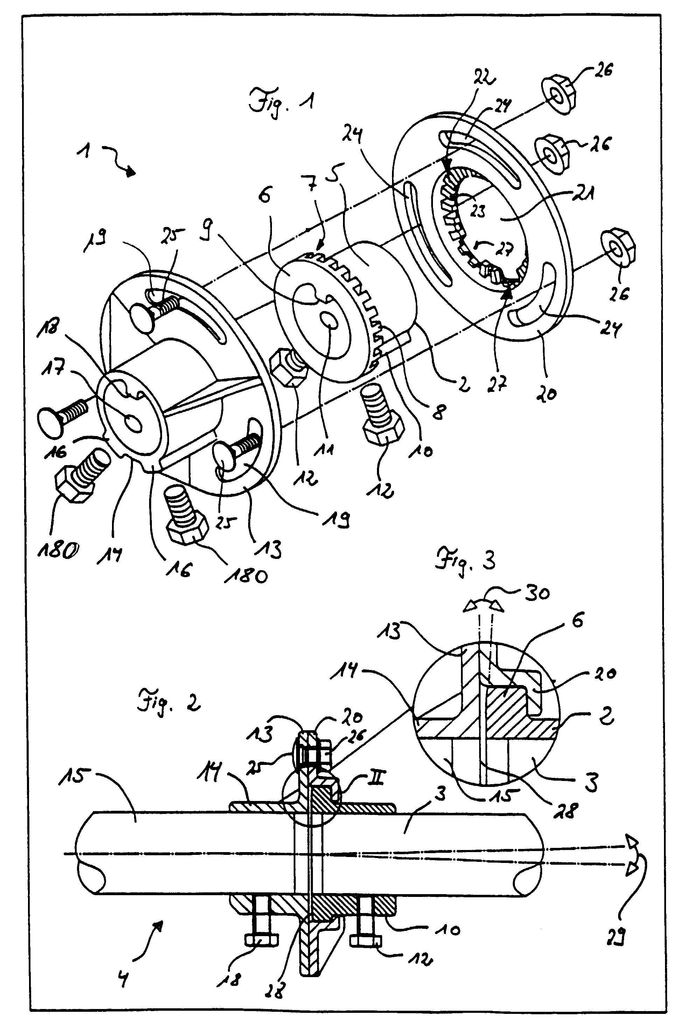

Eine in der Figur 1 dargestellte Kupplung 1 besteht aus einer Nabe 2, welche auf ein Ende eines Wellenteils 3 einer Torsionsfederwelle 4 aufgesetzt ist. Hierzu weist die Nabe 2 einen hohlzylindrischen Grundkörper 5 auf, an dessen einem Ende ein Kragen 6 radial nach außen stehend angeordnet ist.

Der Kragen 6 weist an seiner dem Grundkörper 5 zugewandten Seite einen Zahnkranz 7 auf, der eine Vielzahl von im gleichen Abstand zueinander angeordneten Zähnen 8 hat.

Darüberhinaus ist im Bereich des Kragens 6 ein Vorsprung 9 angeordnet der sich in die Bohrung des Grundkörpers 5 erstreckt und mit einer nicht dargestellten Ausnehmung im Wellenteil 3 zusammenwirkt, so daß die Nabe 2 mittels des in die Ausnehmung des Wellenteils 3 eingreifenden Vorsprungs 9 verdrehfest mit dem Wellenteil 3 verbunden ist.

Schließlich sind auf der Mantelfläche des Grundkörpers 5 der Nabe 2 noch zwei Materialverdickungen 10 angeordnet, die als in Achsrichtung der Nabe 2 verlaufende Stege ausgebildet sind und von denen in Figur 1 lediglich einer sichtbar ist. Die Materialverdickungen 10 weisen jeweils eine Bohrung 11 auf, welche ein Innengewinde haben und in welche Stellschrauben 12 einschraubbar sind, mit denen die Nabe 2 ergänzend an dem Wellenteil 3 festgelegt wird.

Darüberhinaus besteht die Kupplung 1 aus einem Flansch 13, der eine Muffe 14 hat, welche auf einem zweiten Wellenteil 15 der Torsionsfederwelle 4 aufgesetzt ist.

Die Muffe 14 ist ebenfalls als rohrzylindrischer Abschnitt ausgebildet und hat zwei im Abstand zueinander angeordnete Materialverdickungen 16, die als in Achsrichtung der Muffe 14 verlaufende Stege ausgebildet sind und jeweils eine Bohrung 17 mit Innengewinde aufweisen. In diese Bohrungen 17 sind Stellschrauben 180 geschraubt, mit denen die Muffe 14 und damit auch der Flansch 13 verdrehfest mit dem Wellenteil 15 verbunden sind.

Ferner weist die Muffe 14 einen Vorsprung 18 auf, der sich radial in die das Wellenteil 15 umgreifende Öffnung der Muffe 14 erstreckt und mit einer nicht dargestellten Ausnehmung im Wellenteil 15 zusammenwirkt, so daß die Muffe 14 und damit der Flansch 13 verdrehfest auf dem Wellenteil 15 angeordnet sind.

Somit sind sowohl die Nabe 2 als auch der Flansch 13 jeweils verdrehfest mit einem Ende eines Wellenteils 3 bzw. 15 verbunden.

Wie insbesondere aus der Figur 1 erkennbar ist weist der Flansch 13, welcher sich radial von der Muffe 14 nach außen erstreckt drei kreisbogenabschnittförmig ausgebildete Langlöcher 19 auf, die in gleichmäßigem Abstand zueinander angeordnet sind.

Schließlich besteht die Kupplung 1 aus einem Flanschteil 20, welches plattenförmig ausgebildet ist, und mit dem Flansch 13 verbindbar ist. Das Flanschteil 20 weist eine kreisrunde Öffnung 21 auf, deren Randbereich eine Verzahnung 22 hat, die derart ausgebildet ist, daß sich die einzelnen Zähne 23 radial in die Öffnung 21 und axial in Richtung des Zahnkranzes 7 der Nabe 2 erstrecken.

Ferner weist das Flanschteil 20 drei kreisbogenabschnittförmig ausgebildete Langlöcher 24 auf, die im wesentlichen mit den Langlöchern 19 im Flansch 13 übereinstimmen. Die Verbindung des Flansches 13 mit dem Flanschteil 20 erfolgt hierbei durch in die Langlöcher 19 bzw. 24 eingesteckte Schraubbolzen 25, die mit Muttern 26 verschraubt sind.

Wie aus der Figur 1 zu erkennen ist weist das Flanschteil 20 im Bereich der Verzahnung 22 Unterbrechungen 27 auf, durch welche die Materialverdickungen 10 des Grundkörpers 5 der Nabe 2 greifen.

Insbesondere aus den Figuren 2 und 3 ist zu erkennen, daß zwischen dem Kragen 6 der Nabe 2 und dem Flansch 13 ein axiales Spiel 28 vorhanden ist, das derart bemessen ist, daß die beiden Wellenteile 3 und 15 relativ zueinander bewegbar sind, wobei insbesondere eine Bewegung der Wellenteile 3 und 15 um eine bestimmten Winkelbereich aus der Kupplungsachse heraus möglich ist. Der Winkelbereich ist in Figur 2 durch den Pfeil 29 angezeigt. Von besonderer Bedeutung ist hierbei, daß die Zähne 8 des Zahnkranzes 7 der Nabe 2 in jeder Winkellage zumindest teilweise mit den Zähnen 23 der Verzahnung 22 des Flanschteils 20 kämmen, so daß ein auf das Wellenteil 3 wirkendes Drehmoment über die drehfest mit dem Wellenteil 3 verbundene Nabe auf das Flanschteil 20 übertragen wird, von wo aus das Drehmoment auf das Wellenteil 15 über den Flansch 13 bzw. die Muffe 14 wirkt. Durch diese Ausbildung ist somit eine Relativbewegung der beiden Wellenteile 3 und 15 zueinander bei gleichzeitig konstanter formschlüssiger Verbindung gegeben.

Wie aus der Figur 3 zu erkennen ist, verläuft die dem Flansch 13 zugewandte Fläche des Kragens 6 zumindest in ihrem äußeren Randbereich antiparallel zu der der Nabe 2 zugewandten Fläche des Flansches 13, so daß diese im Bereich des Außenrandes des Kragens 6 angeordnete Abschrägung eine Pendelbewegung der Nabe 2 relativ zum Flansch 13 ermöglicht. Die Abschrägung sowie die Pendelbewegung sind in der Figur 3 durch den Pfeil 30 angedeutet. Darüberhinaus ist aus den Figuren 2 und 3 zu erkennen, daß das axiale Spiel 28 zwischen der Nabe 2 und dem Flansch 13 auch eine axiale Bewegung der Wellenteile 3 und 15 zueinander ermöglicht. Es handelt sich somit bei dem axialen Spiel 28 um einen Freiraum, der eine relativ Bewegung der Wellenteile 3 und 15 in axialer Richtung ermöglicht.

## Patentansprüche

1. Kupplung zwischen zwei Wellenteilen (3, 15) einer Torsionsfederwelle (15), vorzugsweise für Sektionaltore oder dergleichen, bestehend aus zwei die beiden einander zugewandten Endbereiche der Wellenteile (3, 15) aufnehmenden Halterungen, in welchen die Wellenteile (3, 15) drehfest gehalten sind und über welche Drehmomente von einer Halterung auf die gegenüberliegende Halterung übertragbar sind, wobei die Halterungen mittels ineinandergreifender Verzahnungen derart miteinander verbindbar sind, daß eine Relativbewegung der beiden Halterungen zueinander zumindest im Bereich eines geringen Winkels zu den Längsachsen der Wellenteile (3, 15) möglich ist, wobei
eine Halterung als mit einem Wellenteil (3) verdrehfest verbindbare Nabe (2) ausgebildet ist, die spielbehaftet formschlüssig mit der als Flansch (13) eines hohlzylindrischen Aufschiebeelementes ausgebildeten zweiten Halterung zusammenwirkt, und wobei die Nabe (2) einen Kragen (6) aufweist, an dessen einer Seite ein Zahnkranz (7) angeordnet ist, **dadurch gekennzeichnet**, daß
die Verzahnung des Zahnkranzes (7) bei montierter Halterung in eine Verzahnung (22) des Flansches der Halterung eingreift, deren Zähne (23) sich radial ins Innere einer Öffnung (21) eines Flanschteils (20) erstrecken, und daß das Flanschteil (20) plattenförmig ausgebildet und unter Zwischenlage der Nabe (2) mit dem Flansch (13) der zweiten Halterung verbindbar ist.

2. Kupplung nach Anspruch 1,
**dadurch gekennzeichnet,**
daß die beiden Wellenteile (3, 15) jeweils eine in ihrer Längsrichtung verlaufende Ausnehmung aufweisen, in die an den Halterungen angeordnete Vorsprünge (9, 18) eingreifen, um die Halterungen verdrehfest mit den Wellenteilen (3, 15) zu verbinden.

3. Kupplung nach Anspruch 1 oder 2,
**dadurch gekennzeichnet**,
daß die Nabe (2) im Bereich ihres das Wellenteil (3) umgreifenden Mantels zumindest eine Materialverdickung (10) aufweist, welche eine Bohrung (11) mit Gewinde hat, durch die eine Stellschraube (12) zur Feststellung der Nabe (2) auf dem Wellenteil (3) greift.

4. Kupplung nach einem der Ansprüche 1 bis 3,
**dadurch gekennzeichnet**,
daß die erste Halterung im Bereich ihres das Wellenteil (15) umgreifenden Mantels zumindest eine Materialverdickung (16) aufweist, welche eine Bohrung (17) mit Gewinde hat, durch die eine Stellschraube (180) zur Feststellung der ersten Halterung auf dem Wellenteil (15) greift.

5. Kupplung nach einem der Ansprüche 1 bis 4,
**dadurch gekennzeichnet,**
daß die dem Zahnkranz (7) der Nabe (2) gegenüberliegende Seite des Kragens (6) antiparallel, nämlich unter einem Winkel zu der ihr zugewandten Fläche des Flansches (13), verläuft, um eine Pendelbewegung der Nabe (2) relativ zu dem Flansch (13) zu ermöglichen.

6. Kupplung nach einem der Ansprüche 1 bis 5,
**dadurch gekennzeichnet**,
daß die Verzahnung (22) im Flanschteil (20) Unterbrechungen (27) aufweist, in welche die Materialverdickungen (10) der Nabe (2) eingreifen.

## Claims

1. Coupling between two shaft portions (3, 15) of a torsion spring shaft (15), preferably for sectional doors or the like, consisting of two holders which receive the two facing end regions of the shaft portions (3, 15) and in which the shaft portions (3, 15) are held secure against rotation and by means of which torques can be transmitted from one holder to the opposite holder, the holders being connectable to one another by means of teeth engaging in one another in such a way that the two holders are able to move relative to one another at least over a small angle to the longitudinal axes of the shaft port (3, 15), wherein
one holder is constructed as a hub (2) which is adapted to be non-rotationally connected to one shaft portion (3), this hub co-operating by interlocking, with play, with the second holder which takes the form of a flange (13) of a hollow cylindrical push-on element, the hub (2) having a collar (6) on one side of which is mounted a ring gear (7), characterised in that when the holder is in the mounted position the teeth on the ring gear (7) engage in teeth (22) on the flange of the holder, the teeth (23) of which extend radially into the interior of an opening (21) in a flange portion (20), and in that the flange portion (20) is in the shape of a plate and can be connected to the flange (13) of the second holder, with the hub (2) interposed between them.

2. Coupling according to claim 1, characterised in that the two shaft portions (3, 15) each have a recess extending longitudinally thereof in which projections (9, 18) provided on the holders engage in order to secure the holders non-rotationally to the shaft portions (3, 15).

3. Coupling according to claim 1 or 2, characterised in that the hub (2) has, in the region of its casing surrounding the shaft portion (3), at least one thickened area (10) which contains a threaded bore (11) through which a fixing screw (12) passes for fixing the hub (2) to the shaft portion (3).

4. Coupling according to one of claims 1 to 3, characterised in that the first holder has, in the region of its casing surrounding the shaft portion (15), at least one thickened area (16) which contains a threaded bore (17) through which a fixing screw (180) passes for fixing the first holder to the shaft portion (15).

5. Coupling according to one of claims 1 to 4, characterised in that the side of the collar (6) located opposite the ring gear (7) of the hub (2) runs antiparallel, namely at an angle to the surface of the flange (13) facing it, in order to enable the hub (2) to execute a pendulum movement relative to the flange (13).

6. Coupling according to one of claims 1 to 5, characterised in that the teeth (22) in the flange portion have gaps (27) in which the thickened areas (10) of the hub (2) engage.

## Revendications

1. Dispositif d'accouplement reliant deux parties (3, 15) d'un arbre à torsion élastique (15), destiné de préférence aux portes sectionnelles ou analogues, accouplement composé de deux attaches dans lesquelles sont logées les deux extrémités se faisant face des parties d'arbres (3, 15), avec solidarité en rotation et transmission des couples d'une attache à l'attache opposée, ces attaches pouvant être reliées entre elles par des dentures en prise l'une dans l'autre de manière à autoriser un mouvement relatif des attaches, restant au moins à l'intérieur d'un angle faible, par rapport aux axes longitudinaux des parties d'arbre (3, 15), une attache étant constituée par un moyeu (2) qui peut être rendu solidaire en rotation d'une partie d'arbre (3) et qui coopère avec jeu et par combinaison de formes, avec l'autre attache constituée par une bride (13) d'un élément coulissant cylindrique creux, le moyeu (2) portant un collet (6) sur le côté duquel se trouve une couronne dentée (7),
caractérisé en ce que
la denture de la couronne dentée (7), lorsque les attaches sont montées, est en prise avec une denture (22) de la bride (23) d'une attache dont les dents pénètrent radialement à l'intérieur d'une ouverture (21) d'une pièce de bride (20), ayant la forme d'une plaque, qui peut être reliée à la bride (13) de l'autre attache, le moyeu (2) se trouvant intercalé entre les parties reliées.

2. Dispositif d'accouplement selon la revendication 1,
caractérisé en ce que
les deux parties d'arbre (3, 15) présentent chacune, en direction longitudinale, un évidement dans lequel est en prise une saillie (9, 18) portée par l'une des attaches, de manière à rendre celles-ci solidaires en rotation des parties d'arbre (3, 15).

3. Dispositif d'accouplement selon la revendication 1 ou 2,
caractérisé en ce que
le moyeu (2), sur son enveloppe entourant la partie d'arbre (3), présente une surépaisseur (10) percée d'un alésage fileté (11) dans lequel est logée une vis (12) de fixation du moyeu (2) sur la partie d'arbre (3).

4. Accouplement selon l'une des revendications 1 à 3,
caractérisé en ce que
la première attache, sur son enveloppe entourant la partie d'arbre (15) présente une surépaisseur (16) percée d'un alésage fileté (17) dans lequel est logée une vis (180) de fixation de cette première attache sur la partie d'arbre (15).

5. Dispositif d'accouplement selon l'une des revendications 1 à 4,
caractérisé en ce que
le côté du collet (6) situé en face de la couronne dentée (7) du moyeu (2) n'est pas parallèle à la portée de la bride (13) située en regard, mais fait un angle avec cette portée pour permettre un mouvement d'oscillation du moyeu (2) par rapport à la bride (13).

6. Dispositif d'accouplement selon l'une des revendications 1 à 5,
caractérisé en ce que
la denture (22) de la pièce de bride (20) présente des interruptions (27) dans lesquelles sont en prise les surépaisseurs (10) du moyeu (2).
